# EUROPÄISCHE PATENTANMELDUNG

(11) **EP 2 267 329 A1**
(43) Veröffentlichungstag der Anmeldung: **29.12.2010**
(21) Anmeldenummer: 09163552.4
(22) Anmeldetag: 24.06.2009
(51) Int. Cl.: F16D 25/0638, F16D 25/12, F16J 15/32

(54) **Kupplungsanordnung, insbesondere für den Antriebsstrang eines Fahrzeugs**

(71) Anmelder: ZF Friedrichshafen AG, 88038 Friedrichshafen (DE)
(72) Erfinder: Matschas, Steffen, 97469 Gochsheim (DE); Dr. Bartha, Alexander, 97082 Würzburg (DE); Paone, Alessio, 97421 Schweinfurt (DE); Schmitt, Guido, 97714 Oerlenbach (DE)

(57) **Zusammenfassung**

Eine Kupplungsanordnung, insbesondere für den Antriebsstrang eines Fahrzeugs, umfassend ein wenigstens bereichsweise mit Fluid gefülltes oder füllbares Gehäuse (12), eine mit dem Gehäuse (12) zur Drehung um eine Drehachse (A) gekoppelte erste Reibflächenanordnung (30), eine mit einem Abtriebsorgan (36) zur Drehung gekoppelte zweite Reibflächenanordnung (32), ein mit dem Gehäuse (12) um die Drehachse (A) drehbares Anpresselement (40), durch welches die erste Reibflächenanordnung (30) und die zweite Reibflächenanordnung (32) in Reibeingriff pressbar sind, wobei das Anpresselement (40) den Innenraum (24) des Gehäuses (12) in einen die Reibflächenanordnungen (30, 32) enthaltenden ersten Raumbereich (44) und einen zur Betätigung des Anpresselements (40) mit Fluid zu speisenden zweiten Raumbereich (46) aufteilt, wobei das Gehäuse (12) einen Nabenbereich (18) mit einer Aufnahmeöffnung (100) für einen axialen Endbereich (54) einer mit dem Abtriebsorgan (56) zur gemeinsamen Drehung zu koppelnden Abtriebswelle (38) aufweist, wobei an einem Innenumfangsbereich der Aufnahmeöffnung (100) ein zur Erzeugung eines dichten Abschlusses bezüglich einer Abtriebswelle (38) in einer nach radial innen offenen Aussparung (104) aufgenommenes Dichtungselement (102) vorgesehen ist, und wobei die Aussparung (104) an einer axialen Seite durch ein an dem Nabenbereich (18) getragenes Abschlusselement (106) begrenzt ist.

## Beschreibung

Die vorliegende Erfindung betrifft eine Kupplungsanordnung, insbesondere für den Antriebsstrang eines Fahrzeugs, umfassend ein wenigstens bereichsweise mit Fluid gefülltes oder füllbares Gehäuse, eine mit dem Gehäuse zur Drehung um eine Drehachse gekoppelte erste Reibflächenanordnung, eine mit einem Abtriebsorgan zur Drehung gekoppelte zweite Reibflächenanordnung, ein mit dem Gehäuse um die Drehachse drehbares Anpresselement, durch welches die erste Reibflächenanordnung und die zweite Reibflächenanordnung in Reibeingriff pressbar sind, wobei das Anpresselement den Innenraum des Gehäuses in einen die Reibflächenanordnungen enthaltenden ersten Raumbereich und einen zur Betätigung des Anpresselements mit Fluid zu speisenden zweiten Raumbereich aufteilt, wobei das Gehäuse einen Nabenbereich mit einer Aufnahmeöffnung für einen axialen Endbereich einer mit dem Abtriebsorgan zur gemeinsamen Drehung zu koppelnden Abtriebswelle aufweist.

Eine derartige Kupplungsanordnung kann in einem Antriebsstrang eines Fahrzeugs, insbesondere auch bei einem Hybrid-Antriebssystem, als Trennkupplung eingesetzt werden, um eine Drehmomentübertragung zwischen einem Antriebsaggregat, beispielsweise Brennkraftmaschine, und dem folgenden Bereich eines Antriebsstrangs wahlweise herzustellen oder aufzuheben. Eine derartige Kupplungsanordnung ist im Allgemeinen nasslaufend ausgebildet, enthält also in dem Innenraum des Gehäuses Fluid, beispielsweise Öl, welches die Reibflächenanordnungen umströmt und dadurch im Schlupfbetrieb Wärme von diesen abführen kann. Die Betätigung der Kupplungsanordnung erfolgt durch die Variation des Fluiddrucks im zweiten Raumbereich. Durch Erhöhung des Fluiddrucks wird eine das Anpresselement axial belastende und in Richtung auf die Reibflächenanordnungen zu bewegende Kraft erzeugt, um diese in gegenseitigen Reibeingriff zu bringen. Die Zufuhr bzw. Abfuhr von Fluid zu bzw. aus diesem zweiten Raumbereich erfolgt im Allgemeinen über eine Abtriebswelle, beispielsweise Getriebeeingangswelle, die in Verbindung mit einer im Allgemeinen getriebeseitig angeordneten Fluidpumpe steht. Die Abtriebswelle weist beispielsweise einen zentral diese durchsetzenden Kanal auf, der an einem axialen Ende der Abtriebswelle offen ist und über in dem Nabenbereich gebildete Kanäle in Verbindung mit dem zweiten Raumbereich steht. Dies bedeutet, dass es erforderlich ist, den in die Aufnahmeöffnung ragenden Endbereich der Abtriebswelle fluiddicht anzuschließen, um eine Fluidleckage einerseits zum Innenraum des Gehäuses hin und andererseits nach außen zu unterbinden.

Es ist die Aufgabe der vorliegenden Erfindung, eine Kupplungsanordnung derart auszugestalten, dass bei einfacher konstruktiver Ausführung ein fluiddichter Anschluss einer Abtriebswelle an den Nabenbereich des Gehäuses realisierbar ist.

Zu diesem Zwecke sieht die vorliegende Erfindung eine Kupplungsanordnung vor, insbesondere für den Antriebsstrang eines Fahrzeugs, umfassend ein wenigstens bereichsweise mit Fluid gefülltes oder füllbares Gehäuse, eine mit dem Gehäuse zur Drehung um eine Drehachse gekoppelte erste Reibflächenanordnung, eine mit einem Abtriebsorgan zur Drehung gekoppelte zweite Reibflächenanordnung, ein mit dem Gehäuse um die Drehachse drehbares Anpresselement, durch welches die erste Reibflächenanordnung und die zweite Reibflächenanordnung in Reibeingriff pressbar sind, wobei das Anpresselement den Innenraum des Gehäuses in einen die Reibflächenanordnungen enthaltenden ersten Raumbereich und einen zur Betätigung des Anpresselements mit Fluid zu speisenden zweiten Raumbereich aufteilt, wobei das Gehäuse einen Nabenbereich mit einer Aufnahmeöffnung für einen axialen Endbereich einer mit dem Abtriebsorgan zur gemeinsamen Drehung zu koppelnden Abtriebswelle aufweist.

Gemäß einem ersten Aspekt der Erfindung ist dabei weiter vorgesehen, dass an einem Innenumfangsbereich der Aufnahmeöffnung ein zur Erzeugung eines dichten Abschlusses bezüglich einer Abtriebswelle in einer nach radial innen offenen Aussparung aufgenommenes Dichtungselement vorgesehen ist, wobei die Aussparung an einer axialen Seite durch ein an dem Nabenbereich getragenes Abschlusselement begrenzt ist.

Durch den erfindungsgemäßen Aufbau wird es möglich, in einfacher Art und Weise ein Dichtungselement am Nabenbereich im Bereich des Innenumfangs der Aufnahmeöffnung vorzusehen. Die hierfür vorgesehene, nach radial innen offene, nutartige Aussparung wird nicht durch einen im Bereich der Abschlussöffnung im Allgemeinen sehr schwer mit hoher Präzision durchführbaren Fräsvorgang oder dergleichen hergestellt, sondern wird durch das Einbringen des Abschlusselements gebaut. Dies ermöglicht nicht nur eine leichte Realisierung dieser nach radial innen offenen Aussparung mit hoher Präzision, sondern erleichtert gleichzeitig auch den Vorgang des Zusammensetzens, da mit dem Einbringen des Abschlusselements auch das im Allgemeinen ringartig, hier vorzugsweise dann auch geschlossen ausgebildete Dichtungselement eingesetzt werden kann.

Bei dem erfindungsgemäßen Aufbau kann weiter vorgesehen sein, dass das Abschlusselement eine im Wesentlichen radial sich erstreckende erste Axialabschlusswandung für die Aussparung bildet.

Um dabei durch Zusammenfügen des Nabenbereichs mit dem Abschlusselement dann in einfacher Weise die in beiden axialen Richtungen abgeschlossene Aussparung bereitstellen zu können, kann weiter vorgesehen sein, dass der Nabenbereich eine im Wesentlichen radial sich erstreckende zweite Axialabschlusswandung für die Aussparung bildet.

Ferner wird zum Ermöglichen einer stabilen Halterung des Abschlusselements vorgeschlagen, dass das Abschlusselement eine im Wesentlichen axial sich erstreckende Radialabschlusswandung für die Aussparung bildet, so dass beispielsweise vorgesehen sein kann, dass das Abschlusselement einen im Wesentlichen L-förmigen Querschnitt aufweist.

Die feste Halterung des Abschlusselements in der Aufnahmeöffnung kann beispielsweise durch Einpressen realisiert sein, so dass beispielsweise materialschlüssige Verbindungen, wie Anschweißen, welche die Präzision der Aussparung beeinträchtigen können, nicht durchgeführt werden müssen.

Die eine axiale Seite kann beispielsweise die von dem Abtriebsorgan weiter entfernt liegende axiale Seite sein, im Allgemeinen also die in einem Antriebssystem einem Antriebsaggregat, wie z.B. Brennkraftmaschine, zugewandte axiale Seite.

Gemäß einem zweiten Erfindungsaspekt kann zum Lösen der eingangs genannten Aufgabe vorgesehen sein, dass die Aufnahmeöffnung an einer von dem Abtriebsorgan weiter entfernt liegenden axialen Seite durch eine Abschlusskappe abgeschlossen ist.

Hier ist also vorgesehen, dass die Aufnahmeöffnung als axial den Nabenbereich vollständig durchsetzende Öffnung ausgebildet ist. Von einer axialen Seite her ragt im aufgebauten Zustand eines Antriebssystems die Abtriebswelle in die Aufnahmeöffnung, beispielsweise unter Erzeugung des dichten Abschlusses, wie vorangehend erläutert. Von der anderen axialen Seite her kann die Aufnahmeöffnung erfindungsgemäß dann durch die Abschlusskappe fluiddicht abgeschlossen werden. Dies führt zu einem einfachen Aufbau, unter gleichzeitig bereitgestellter Möglichkeit, den fluiddichten Abschluss einfach zu realisieren. Gleichzeitig können die an dem Nabenbereich vorzusehenden Bearbeitungsmaßnahmen, wie z.B. das Einbringen einer axial gerichteten Verzahnung zur Ankopplung beispielsweise an eine Antriebswelle, leicht durchgeführt werden.

Die Abschlusskappe kann im Wesentlichen topf- oder schalenförmig ausgebildet sein und mit einem Umfangsbereich in die Aufnahmeöffnung eingesetzt sein. Um dabei in Verbindung mit dem erstgenannten Aspekt gleichzeitig eine zuverlässige Sicherung für das die nach innen offene Aussparung begrenzende Abschlusselement zu realisieren, wird weiter vorgeschlagen, dass die Abschlusskappe mit ihrem Umfangsbereich axial an das Abschlusselement heran reicht.

Die Abschlusskappe kann an dem Nabenbereich durch Verschweißen festgelegt sein, so dass nicht nur eine stabile Halterung erreicht wird, sondern gleichzeitig auch die Fluiddichtigkeit der Anbindung der Abschlusskappe gewährleistet bzw. unterstützt wird.

Um zur Betätigung des Anpresselements den zweiten Raumbereich mit Druckfluid speisen zu können bzw. Fluid aus diesem abziehen zu können, wird weiter vorgeschlagen, dass an dem Nabenbereich wenigstens ein die Aufnahmeöffnung mit dem zweiten Raumbereich verbindender Fluidkanal vorgesehen ist. Eine Behinderung des zur Betätigung des Anpresselements erforderlichen Fluidstroms kann dadurch ausgeschlossen werden, dass der Umfangsbereich wenigstens einen Fluiddurchlass aufweist.

Die Erfindung betrifft ferner ein Antriebssystem für ein Fahrzeug, umfassend ein Antriebsaggregat mit einer Antriebswelle, eine erfindungsgemäße Kupplungsanordnung, wobei das Gehäuse mit der Antriebswelle zur gemeinsamen Drehung um die Drehachse gekoppelt ist, ferner umfassend eine Abtriebswelle, insbesondere Getriebeeingangswelle, wobei das Abtriebsorgan der Kupplungsanordnung mit der Abtriebswelle zur gemeinsamen Drehung gekoppelt ist und die Abtriebswelle einen an ihrem axialen Endbereich zu der Aufnahmeöffnung offenen Fluidkanal aufweist.

Die vorliegende Erfindung wird nachfolgend mit Bezug auf die beiliegenden Figuren detailliert beschrieben. Es zeigt:
- Fig. 1: eine Teil-Längsschnittansicht einer erfindungsgemäß aufgebauten Kupplungsanordnung;
- Fig. 2: eine Detailansicht eines Nabenbereichs;
- Fig. 3: eine der Fig. 2 entsprechende Darstellung mit in den Nabenbe- reich eingesetzter Abschlusskappe.

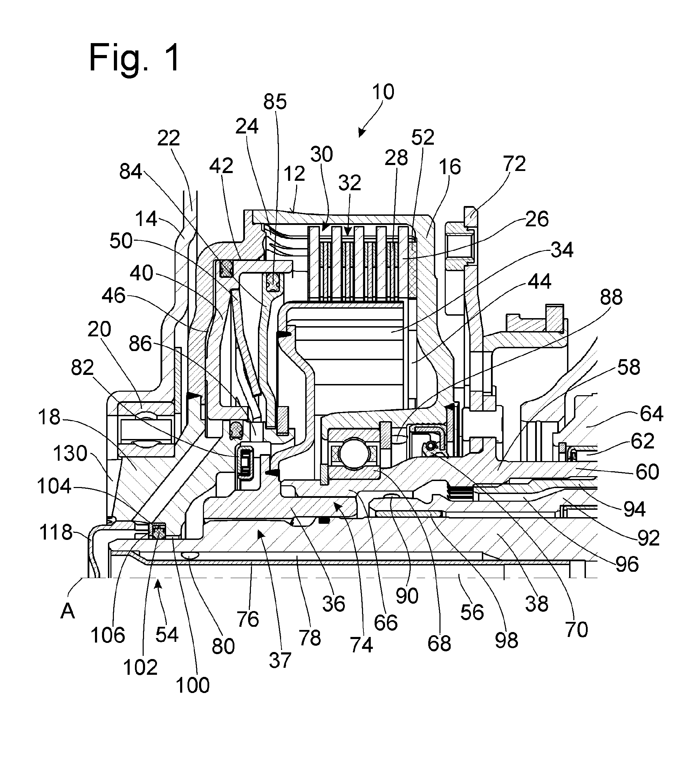

Eine als nasslaufende Kupplung ausgebildete erfindungsgemäß aufgebaute Kupplungsanordnung ist in Fig. 1 allgemein mit 10 bezeichnet. Die Kupplungsanordnung 10 umfasst ein Gehäuse 12 mit einer einem Antriebsaggregat zugewandt zu positionierenden ersten Gehäuseschale 14 und einer einem Getriebe zugewandt zu positionierenden zweiten Gehäuseschale 16. Die beiden Gehäuseschalen 14, 16 sind in ihrem radial äußeren Bereich miteinander beispielsweise durch Verschweißung verbunden.

Mit der ersten Gehäuseschale 14 ist in deren radial inneren Bereich eine Gehäusenabe 18 verbunden, welche über ein Lager, z.B. Wälzkörperlager, 20 an einer im Wesentlichen feststehenden Baugruppe 22, beispielsweise einem in einer Getriebe- bzw. Kupplungsglocke getragenen Lagerschild, um eine Drehachse A drehbar gelagert ist.

In einem Innenraum 24 des Gehäuses sind zwei jeweils eine Mehrzahl von Reibscheiben bzw. Lamellen 26 bzw. 28 umfassende Reibflächenanordnungen 30, 32 vorgesehen. Die Lamellen 26, 28 der beiden Reibflächenanordnungen 30, 32 sind axial aufeinander folgend alternierend angeordnet. Die Lamellen 26 der ersten Reibflächenanordnung 30 sind in ihrem radial äußeren Bereich durch Verzahnung an einen im Wesentlichen axial sich erstreckenden Abschnitt der zweiten Gehäuseschale 16 zur gemeinsamen Drehung mit dieser angekoppelt. Die Lamellen 28 der zweiten Reibflächenanordnung sind in ihrem radial inneren Bereich durch Verzahnung an einen Reibelemententräger 34 zur gemeinsamen Drehung angekoppelt. Mit einem radial inneren Bereich ist der Reibelemententräger 34 an eine als Abtriebsorgan wirksame Abtriebsnabe 36 angebunden. Die Abtriebsnabe 36 ist im zusammengefügten Zustand eines Antriebssystems durch Verzahnungsanordnungen bei 37 mit einer Abtriebswelle 38, beispielsweise Getriebeeingangswelle, im Wesentlichen drehfest gekoppelt.

Um die beiden Reibflächenanordnungen 30, 32 unter axialer Abstützung an der zweiten Gehäuseschale 16 in gegenseitigen Reibeingriff zu bringen, ist ein ringartig ausgebildeter und als Anpresselement wirkender Kupplungskolben 40 vorgesehen. Dieser ist in einem axial offenen und durch die erste Gehäuseschale 14 und die Gehäusenabe 18 gebildeten Aufnahmeraum 42 fluiddicht axial bewegbar aufgenommen und unterteilt den Innenraum 24 des Gehäuses in einen die beiden Reibflächenanordnungen 30, 32 und auch den Reibelemententräger 34 enthaltenden ersten Raumbereich 44 und einen zweiten Raumbereich 46. Über eine Mehrzahl nachfolgend noch erläuterter Fluidkanäle 48 kann der zweite Raumbereich 46 mit Fluid gespeist werden, um durch Erhöhung des Fluiddrucks im zweiten Raumbereich 46 bezüglich des Fluiddrucks im ersten Raumbereich 44 den Kupplungskolben 40 entgegen der Vorspannwirkung einer diesen in einen Ausrückzustand vorspannenden Feder 50 in Richtung auf die Lamellen 26, 28 zu zu bewegen und somit die Kupplungsanordnung 10 in einen Einrückzustand zu bringen. Wie bereits ausgeführt, stützen sich dabei die Lamellen 26, 28, von welchen beispielsweise die Lamellen 28 Reibbeläge tragen können, axial an der zweiten Gehäuseschale 16 ab, wobei diese Abstützung über an der axial letzten Lamelle 16 der ersten Reibflächenanordnung 30 vorgesehene, beispielsweise angeklebte Abstützelemente 52 erfolgen kann.

Zur Fluidzufuhr zu den Kanälen 48 und somit zum zweiten Raumbereich 46 weist die Abtriebswelle 38 einen einen zentralen und an deren axialem Endbereich 54 offenen Fluidkanal 56 auf, der beispielsweise getriebeseitig in Verbindung mit einer Fluidpumpe stehen kann. Das aus dem axialen Endbereich 54 im Wesentlichen auch axial austretende Fluid strömt in die Kanäle 48 und über diese in den zweiten Raumbereich 46.

Ein als Hohlwelle ausgebildetes Zwischenwellenelement 58 ist in einem ersten axialen Endbereich 60 über ein Lager, z.B. Wälzkörperlager, 62 an einer im Wesentlichen feststehenden Baugruppe 64, beispielsweise einem weiteren Lagerschild, zur Drehung um die Drehachse A getragen. In seinem anderen axialen Endbereich 66 trägt das Zwischenwellenelement 58 über ein weiteres Lager, z.B. Wälzkörperlager, 68 den radial inneren Bereich der zweiten Gehäuseschale 16, so dass das Gehäuse 12 einerseits über das Lager 20 und andererseits über das Lager 68 definiert gelagert ist. Eine zwischen der zweiten Gehäuseschale 16 und dem Zwischenwellenelemet 58 angeordnete Dichtungsanordnung 70 stellt an diesem axialen Endbereich des Gehäuses 12 den fluiddichten Abschluss des Innenraums 24 sicher.

Man erkennt dabei, dass die zweite Gehäuseschale 16 nicht nur einen wesentlichen Bereich des Gehäuses bereitstellt, sondern in ihrem radial äußeren, näherungsweise axial sich erstreckenden Abschnitt einen Lamellenträger für die erste Reibflächenanordnung 30 bereitstellt und in ihrem radial inneren, näherungsweise ebenfalls axial sich erstreckenden Abschnitt einen Lagerhals für das Lager 68 bereitstellt. Dies führt im Vergleich zu einem aus mehreren Teilen zusammengefügten Aufbau zu deutlich niedrigeren Herstellungskosten bei gleichzeitig erhöhter Fertigungsgenauigkeit.

Insbesondere bei Einsatz in einem Hybrid-Antriebssystem kann das Zwischenwellenelement 58 einen Träger 72 für den Rotor einer Elektromaschine aufweisen bzw. tragen. Der Stator der Elektromaschine kann an einer im Wesentlichen feststehenden Baugruppe, wie z.B. einer Getriebeglocke, getragen sein.

Das Zwischenwellenelement 58 ist bei 74 durch Verzahnungsanordnungen mit der Abtriebsnabe 36 zur gemeinsamen Drehung gekoppelt, so dass bei ausgerückter Kupplungsanordnung 10 ein über den Träger 72 eingeleitetes Antriebsdrehmoment einer Elektromaschine über das Zwischenwellenelement 58 auf die Abtriebsnabe 36 und von dieser auf die Abtriebswelle 38 übertragen werden kann.

Um den Innenraum 24 des Gehäuses 12 mit Fluid zu speisen, weist die Abtriebswelle 38 einen den Fluidkanal 56 umgebenden und durch ein hülsenartiges Einsatzelement 76 nach radial innen begrenzten ringartigen Fluidkanal 78 auf. Dieser ist am Endbereich 54 der Abtriebswelle 38 über Öffnungen 80 nach radial außen offen zu einem zwischen der Gehäusenabe 18 und der Abtriebsnabe 36 liegenden Raumbereich. Dieser Raumbereich führt vorbei an einem die Gehäusenabe 36 axial an dem Nabenbereich 18 abstützenden Lager 82 weiter zum Innenraum 24, und zwar an der dem Anpresselement 40 zugewandten axialen Seite des Reibelemententrägers 34. In diesem Bereich ist an dem Nabenbereich 18 axial feststehend eine im Wesentlichen den Kupplungskolben 40 radial überdeckende, ringartig ausgebildete Stauscheibe 84 vorgesehen. Das über die Öffnungen 80 zugeführte Fluid kann einerseits in den zwischen der Stauscheibe 84 und dem Reibelemententräger 34 gebildeten Raumbereich und von dort radial außen zu den Reibflächenanordnungen 30, 32 strömen, kann andererseits jedoch über Öffnungen 86 in den zwischen dem Kupplungskolben 40 und der Stauscheibe 84 gebildeten Raumbereich strömen. Es ist somit zwischen dem Kupplungskolben 40 und der Stauscheibe 84 ein Druckausgleichsraum gebildet, welcher dafür sorgt, dass die durch Fliehkrafteinwirkung erzeugte Beeinflussung des auf den Kupplungskolben 40 wirkenden Fluiddrucks an beiden axialen Seiten näherungsweise gleich ist, so dass der auf den Kupplungskolben 40 einwirkende Fluiddruck in seiner Gesamtheit im Wesentlichen keinen Fliehkrafteinflüssen unterliegt. Insbesondere in Stillstandzeiten, in welchen der Innenraum 24 des Gehäuses 12 zumindest teilweise leer läuft, wird sich bei Wiederinbetriebnahme im zweiten Raumbereich 46 einerseits und in dem zwischen dem Kupplungskolben 40 und der Stauscheibe 84 gebildeten Ausgleichsraum andererseits gleichermaßen Fluid im radial äußeren Bereich ansammeln, um somit eine ungewünschte Axialbelastung des Kupplungskolbens 40 in Richtung auf die beiden Reibflächenanordnungen 30, 32 zu verhindern. Man erkennt dabei in Fig. 1, dass die Stauscheibe 84 nicht nur in ihrem radial äußeren Bereich im Wesentlichen fluiddicht, z.B. vermittels einer anvulkanisierten Dichtung 85, gegenüber dem sich axial bewegenden Kupplungskolben 40 abgeschlossen ist, sondern auch das axiale Widerlager für die den Kupplungskolben 40 in Richtung Ausrücken belastende Feder 50 bildet.

Das dem Innenraum 24 zugeführte Fluid wird aus diesem über Öffnungen 88 in der zweiten Gehäuseschale 16, Öffnungen 90 in dem Zwischenelement 58 und einen im Wesentlichen zwischen einer Stützhohlwelle 92 und einer mit dem Zwischenwellenelement 58 durch Verzahnungsanordnungen drehgekoppelten Pumpenantriebswelle 94 gebildeten Hohlraum 96 abgeleitet. Man erkennt dabei in Fig. 1 weiter, dass die Stützhohlwelle 92 über eine auch einen im Wesentlichen dichten Abschluss bereit stellende Lagerungs/Dichtungsanordnung 98 an den Außenumfang der Abtriebswelle 38 angeschlossen ist.

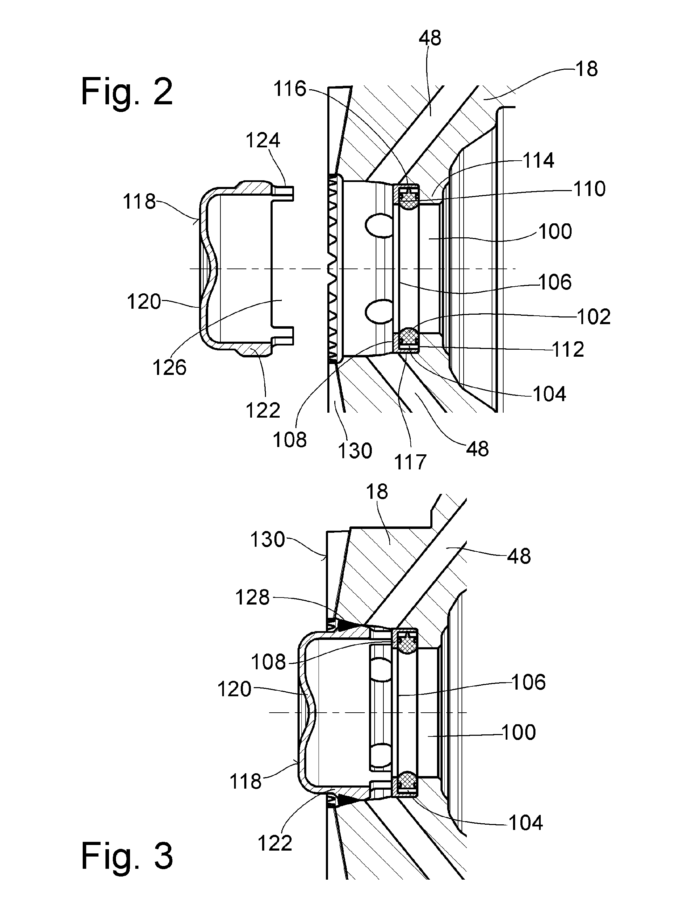

Nachfolgend wird auch unter Bezugnahme auf die Fig. 2 und 3 der fluiddichte Anschluss der Abtriebswelle 38 in ihrem axialen Endbereich 54 an das Gehäuse 12, insbesondere die Gehäusenabe 18 erläutert. Man erkennt in der Fig. 2 den radial inneren Bereich der Gehäusenabe 18, der von einer zentralen Aufnahmeöffnung 100 durchsetzt ist. Die Gehäusenabe 18 ist somit zu beiden axialen Seiten offen und ermöglicht das axiale Einführen des Endbereichs 54 der Abtriebswelle 38, wobei bei diesem axialen Einführen diese gleichzeitig auch in Drehkopplungsverbindung mit dem Nabenbereich 36 tritt. Ein an dem Außenumfang der Abtriebswelle 38 anliegendes, ringartiges Dichtungselement 102 ist dabei in einer nach radial innen offenen Aussparung 104 aufgenommen. Diese Aussparung 104 ist durch die Gehäusenabe 18 einerseits und ein in die Aufnahmeöffnung 100 eingesetztes, vorzugsweise ringartig ausgebildetes Abschlusselement 106 andererseits in beiden axialen Richtungen begrenzt. Das Abschlusselement 106 weist einen durch die Schraffur in Fig. 2 erkennbaren im Wesentlichen L-förmigen Querschnitt auf und bildet mit einem näherungsweise radial sich erstreckenden L-Schenkel 108 eine erste Axialabschlusswandung 110 für die Aussparung 104, und zwar an einer von der Abtriebsnabe 36 weiter entfernt liegenden axialen Seite der Aussparung 104. Eine zweite Axialabschlusswandung 112 ist durch einen nach radial innen sich erstreckenden ringartigen Ansatz 114 der Gehäusenabe 18 bereitgestellt. Die zweite Axialabschlusswandung begrenzt die Aussparung 104 an ihrer der Abtriebsnabe 36 zugewandt liegenden Seite. Nach radial außen ist die Aussparung 104 durch einen näherungsweise axial sich erstreckenden L-Schenkel 116 begrenzt, welcher gleichzeitig auch eine Radialabschlusswandung 117 bildet. Mit diesem L-Schenkel 116, der vorzugsweise eine ringartig geschlossene Struktur aufweist, kann das Abschlusselement 106 axial in die Aufnahmeöffnung 100 eingepresst werden, bis der L-Schenkel 106 an dem die zweite Axialabschlusswandung 112 bereitstellenden Ansatz 114 der Gehäusenabe 18 anstößt. Es wird somit durch das Einpressen einerseits ein fester Verbund hergestellt, andererseits wird durch die Lagevorgabe vermittels des Ansatzes 114 eine definierte axiale Positionierung des Abschlusselements 106 sichergestellt.

Beim Aufbau der Kupplungsanordnung 10 kann so vorgegangen werden, dass beispielsweise das ringartige Dichtungselement 102 mit ringartig geschlossener Formgebung in das Abschlusselement 106 eingesetzt wird und dann das Abschlusselement 106 axial in die Aufnahmeöffnung 110 eingepresst wird. Diese Art und Weise des Aufbaus der Aussparung 104 ermöglicht es, für das Dichtungselement 102 einen ohne Schloss ausgebildeten geschlossenen Ring einzusetzen, was einerseits die Dichtwirkung verbessert, andererseits den Einsatz kostengünstigerer Dichtungselemente ermöglicht.

Man erkennt in den Fig. 2 und 3 weiterhin eine die Aufnahmeöffnung 100 axial abschließende Abschlusskappe 118. Diese weist im dargestellten Beispiel eine näherungsweise topfartige Formgebung mit einem Bodenbereich 120 und einem Umfangsbereich 122 auf. Mit ihrem Umfangsbereich wird die Abschlusskappe 118, nachdem das Abschlusselement 106 zusammen mit dem Dichtungselement 102 in der Aufnahmeöffnung 100 positioniert worden ist, axial in die Aufnahmeöffnung 100 eingesetzt, und zwar so weit, dass der Umfangsbereich 122 axial an dem im Wesentlichen radial sich erstreckenden L-Schenkel 108 des Abschlusselements 106 anliegt. Somit ist neben der durch Einpressen gebildeten Halterung des Abschlusselements 106 gleichzeitig eine axiale Sicherung für dieses realisiert. Um dabei den Fluiddurchtritt zu bzw. von den Kanälen 48 zu gewährleisten, sind an dem Umfangsbereich 122 an dessen axialem und an das Abschlusselement 106 anschließendem Endbereich Abstützstege 124 vorgesehen, welche zwischen sich Fluiddurchtritte 126 belassen.

Nachdem die Abschlusskappe 118 in der Aufnahmeöffnung 100 positioniert worden ist, kann sie am Außenumfang des Umfangsbereichs 122 beispielsweise durch eine vermittels Laserschweißen gebildete und über den gesamten Umfang sich erstreckende Schweißnaht 128 an der Gehäusenabe 18 festgelegt werden. Dies stellt einen fluiddichten Abschluss der Gehäusenabe 18 in ihrem radial inneren Bereich sicher.

Durch das Ausgestalten der Gehäusenabe 18 in ihrem radial inneren Bereich mit einer diese axial vollständig durchsetzenden Aufnahmeöffnung 100 und das Abschließen der Aufnahmeöffnung 100 durch die Abschlusskappe 118 wird das Gehäuse 12, insbesondere dessen Gehäusenabe 18 deutlich einfacher herstellbar. Einerseits wird es möglich, die Aussparung 104 in der vorangehend beschriebenen Art und Weise zu bauen, andererseits ist es wesentlich leichter möglich, die Kanäle 48 einzubringen sowie eine einem Antriebsaggregat zugewandt positionierte, beispielsweise als Hirthverzahnung ausgebildete Axialverzahnung 130 einzubringen. Diese kann auf Grund der vergleichsweise großen radial innen liegenden Aufnahmeöffnung 100 beispielsweise durch Schlagdrehen hergestellt werden.

Es sei abschließend darauf hingewiesen, dass die vorangehend mit Bezug auf die Fig. 2 und 3 erläuterten Aspekte der Ausgestaltung der Gehäusenabe in ihrem radial inneren Bereich, also das Vorsehen des Verschlusselements 106 einerseits und das Vorsehen der Abschlusskappe 118 andererseits eigenständige Erfindungsaspekte darstellen, die selbstverständlich in besonders vorteilhafter Weise miteinander kombinierbar sind. Insbesondere ist zu betonen, dass diese Ausgestaltung im Wesentlichen unabhängig davon realisierbar ist, wie die Kupplungsanordnung 10 beispielsweise hinsichtlich ihrer Reibflächenanordnungen, hinsichtlich der Ausgestaltung bzw. Funktionalität des Kupplungskolbens oder auch hinsichtlich der Kombination mit einer Elektromaschine ausgebildet ist.

Auch ist es selbstverständlich, dass im Bereich des fluiddichten Abschlusses der Aufnahmeöffnung 100 verschiedene Variationen möglich sind. So kann beispielsweise das Abschlusselement 106 derart ausgebildet sein, dass entweder der radial sich erstreckende L-Schenkel 108 oder der axial sich erstreckende L-Schenkel 116 nicht mit ringartig geschlossener Kontur ausgebildet ist, sondern von dem anderen, dann im Wesentlichen ringartig ausgebildeten L-Schenkel sich erstreckende in Umfangsrichtung voneinander getrennte Schenkelabschnitte umfasst. Dies kann insbesondere bei dem axial sich erstreckenden L-Schenkel 116 vorteilhaft sein, um diesen unter größerer radialer Vorspannung dieser Schenkelabschnitte nach außen verstärkt in die Aufnahmeöffnung 110 einzupressen.

Auch kann die Abschlusskappe 118 mit anderer, beispielsweise schalen- bzw. kalottenartiger Formgebung ausgebildet sein, wobei der radial äußere, mehr axial sich erstreckende Abschnitt dann den Umfangsbereich 122 bereitstellt. Während die Gehäusenabe 18 im Allgemeinen als Gussbauteil bzw. durch materialabhebende Bearbeitung nachbearbeitetes Bauteil bereitgestellt ist, können das Abschlusselement 106 oder/und die Abschlusskappe 118 in einfacher Weise durch Umformen von Blechstanzrohlingen als Umformbauteile bereitgestellt werden.

## Patentansprüche

1. Kupplungsanordnung, insbesondere für den Antriebsstrang eines Fahrzeugs, umfassend ein wenigstens bereichsweise mit Fluid gefülltes oder füllbares Gehäuse (12), eine mit dem Gehäuse (12) zur Drehung um eine Drehachse (A) gekoppelte erste Reibflächenanordnung (30), eine mit einem Abtriebsorgan (36) zur Drehung gekoppelte zweite Reibflächenanordnung (32), ein mit dem Gehäuse (12) um die Drehachse (A) drehbares Anpresselement (40), durch welches die erste Reibflächenanordnung (30) und die zweite Reibflächenanordnung (32) in Reibeingriff pressbar sind, wobei das Anpresselement (40) den Innenraum (24) des Gehäuses (12) in einen die Reibflächenanordnungen (30, 32) enthaltenden ersten Raumbereich (44) und einen zur Betätigung des Anpresselements (40) mit Fluid zu speisenden zweiten Raumbereich (46) aufteilt, wobei das Gehäuse (12) einen Nabenbereich (18) mit einer Aufnahmeöffnung (100) für einen axialen Endbereich (54) einer mit dem Abtriebsorgan (36) zur gemeinsamen Drehung zu koppelnden Abtriebswelle (38) aufweist,
**dadurch gekennzeichnet, dass** an einem Innenumfangsbereich der Aufnahmeöffnung (100) ein zur Erzeugung eines dichten Abschlusses bezüglich einer Abtriebswelle (38) in einer nach radial innen offenen Aussparung (104) aufgenommenes Dichtungselement (102) vorgesehen ist, wobei die Aussparung (104) an einer axialen Seite durch ein an dem Nabenbereich (18) getragenes Abschlusselement (106) begrenzt ist.

2. Kupplungsanordnung nach Anspruch 1,
**dadurch gekennzeichnet, dass** das Abschlusselement (106) eine im Wesentlichen radial sich erstreckende erste Axialabschlusswandung (110) für die Aussparung (104) bildet.

3. Kupplungsanordnung nach Anspruch 2,
**dadurch gekennzeichnet, dass** der Nabenbereich (18) eine im Wesentlichen radial sich erstreckende zweite Axialabschlusswandung (112) für die Aussparung (104) bildet.

4. Kupplungsanordnung nach einem der Ansprüche 1 bis 3,
**dadurch gekennzeichnet, dass** das Abschlusselement (106) eine im Wesentlichen axial sich erstreckende Radialabschlusswandung (117) für die Aussparung (104) bildet.

5. Kupplungsanordnung nach Anspruch 2 und Anspruch 4,
**dadurch gekennzeichnet, dass** das Abschlusselement (106) einen im Wesentlichen L-förmigen Querschnitt aufweist.

6. Kupplungsanordnung nach einem der Ansprüche 1 bis 5,
**dadurch gekennzeichnet, dass** das Abschlusselement (106) in der Aufnahmeöffnung (100) durch Einpressen gehalten ist.

7. Kupplungsanordnung nach einem der Ansprüche 1 bis 6,
**dadurch gekennzeichnet, dass** die eine axiale Seite eine von dem Abtriebsorgan (36) weiter entfernt liegende axiale Seite ist.

8. Kupplungsanordnung nach einem der Ansprüche 1 bis 7 oder dem Oberbegriff des Anspruchs 1,
**dadurch gekennzeichnet, dass** die Aufnahmeöffnung (100) an einer von dem Abtriebsorgan (36) weiter entfernt liegenden axialen Seite durch eine Abschlusskappe (118) abgeschlossen ist.

9. Kupplungsanordnung nach Anspruch 8,
**dadurch gekennzeichnet, dass** die Abschlusskappe (118) im Wesentlichen topf- oder schalenartig ausgebildet ist und mit einem Umfangsbereich (122) in die Aufnahmeöffnung (100) eingesetzt ist.

10. Kupplungsanordnung nach Anspruch 9,
**dadurch gekennzeichnet, dass** die Abschlusskappe (118) mit ihrem Umfangsbereich (122) axial an das Abschlusselement (106) heranreicht.

11. Kupplungsanordnung nach einem der Ansprüche 8 bis 10,
**dadurch gekennzeichnet, dass** die Abschlusskappe (118) an dem Nabenbereich (18) durch Verschweißen festgelegt ist.

12. Kupplungsanordnung nach einem der Ansprüche 1 bis 11,
**dadurch gekennzeichnet, dass** an dem Nabenbereich (18) wenigstens ein die Aufnahmeöffnung (100) mit dem zweiten Raumbereich (46) verbindender Fluidkanal (48) vorgesehen ist.

13. Kupplungsanordnung nach Anspruch 9 und Anspruch 12,
**dadurch gekennzeichnet, dass** der Umfangsbereich (122) wenigstens einen Fluiddurchlass (126) aufweist.

14. Antriebssystem für ein Fahrzeug, umfassend ein Antriebsaggregat mit einer Antriebswelle, eine Kupplungsanordnung (10) nach einem der vorhergehenden Ansprüche, wobei das Gehäuse (12) mit der Antriebswelle zur gemeinsamen Drehung um die Drehachse (A) gekoppelt ist, ferner umfassend eine Abtriebswelle (38), insbesondere Getriebeeingangswelle, wobei das Abtriebsorgan (36) der Kupplungsanordnung (10) mit der Abtriebswelle (38) zur gemeinsamen Drehung gekoppelt ist und die Abtriebswelle (38) einen an ihrem axialen Endbereich (54) zu der Aufnahmeöffnung (100) offenen Fluidkanal (56) aufweist.
